# FASCICULE DE BREVET EUROPEEN

(11) **EP 1 799 888 B1**
(45) Date de publication et mention de la délivrance du brevet: **23.12.2009**
(21) Numéro de dépôt: 05798963.4
(22) Date de dépôt: 12.09.2005
(51) Int. Cl.: D01G 1/04

(54) **SYSTEME DESTINE A LA FABRICATION DE FILS COUPES**
SYSTEM ZUR HERSTELLUNG VON SCHNITTGLASFASERN
SYSTEM FOR MAKING CHOPPED STRANDS

(30) Priorité: 07.10.2004 FR 0452285
(43) Date de publication de la demande: 27.06.2007
(73) Titulaire: Saint-Gobain Vetrotex France S.A., 73000 Chambéry (FR)
(72) Inventeur: Font, Dominique, 73190 Saint Baldoph (FR); Veuillen, Gérard, 73000 Barberaz Chambery (FR)
(74) Mandataire: Joly, Jean-Jacques
(86) Numéro de dépôt international: PCT/FR2005/050727
(87) Numéro de publication internationale: WO 2006/037908

(56) Documents cités:
- GB-A- 2 036 716
- US-A- 3 771 701
- US-A- 4 551 160
- US-A- 6 062 048
- US-A- 6 076 442

## Description

La présente invention concerne le domaine de la fabrication de fils coupés à usage technique, en particulier des fils en matière thermoplastique et notamment de fils de verre, et elle concerne plus spécifiquement un procédé de relance automatique et système pour la fabrication de tels fils permettant la mise en oeuvre de ce procédé.

On connaît de nombreux dispositifs susceptibles de réaliser de telles fabrications. Ces systèmes comprennent généralement au moins une filière à partir de laquelle des fils de verre sont étirés et amenés jusque dans un dispositif de coupe constitué par exemple d'un cylindre d'appui ou enclume qui coopère avec un cylindre coupeur équipé de lames régulièrement réparties à sa périphérie. Le coupeur est disposé de manière à venir en contact sous pression avec la surface circonférentielle du cylindre d'appui, définissant ainsi une zone de coupe.

Le certificat d'addition français FR 2 075 019 illustre un système de ce type dans lequel une filière est associée à un dispositif de coupe.

Afin d'augmenter la productivité des installations de fabrication de fils coupés, on a imaginé des solutions selon lesquelles plusieurs filières alimentent un unique dispositif de coupe. Le brevet français FR 2 490 251 illustre une solution de ce type. Ces techniques présentent a priori l'avantage d'avoir une seule machine de coupe associée à plusieurs filières.

Or, ces machines de coupe sont destinées à une production journalière de l'ordre d'une dizaine de tonnes de fils coupés. On admet classiquement que pour une production de cet ordre de grandeur, l'utilisateur est confronté à plusieurs dizaines de « casses filières » (une « casse filière » se définit comme une rupture de la mèche de filaments entre la sortie de la filière et le coupeur), qui nécessiteront au moins autant de phases de relance à exécuter par l'opérateur (la phase de relance est une opération qui consiste à rétablir la continuité de la mèche de filaments entre la filière et le coupeur)

L'augmentation significative de la capacité de production (d'au moins un facteur deux) constitue un objectif quasiment impossible à atteindre en considérant le même outil industriel, à relance manuelle, servi par le même nombre d'utilisateur.

Comme précisé précédemment, le stade le plus critique concerne l'interruption des filières consécutive à une « casse filière ». Ces « casses filières » induisent une intervention humaine, pour relancer le fil dans la machine de coupe. Cet incident est donc particulièrement pénalisant pour le rendement de production car il requiert un temps de préparation relativement long.

Une opération de relance d'un fil dans un coupeur est une opération transitoire très délicate à gérer dans la mesure où le fil est fragile et qu'il faut amener sa vitesse linéaire quasiment nulle à plusieurs dizaines de m/sec. On constate généralement qu'une opération de relance se décompose en 2/3 du temps pour obtenir de nouveau un régime de fonctionnement optimal au niveau de la filière, un peu moins de 1/3 du temps pour remettre l'installation en état de fonctionnement.

On conçoit alors que cette phase de relance soit une opération vitale dans ce procédé continu dans la mesure où si elle n'est pas réussie à 100%, la production est stoppée et le rendement de la machine chute.

Une première technique de relance consiste à déposer manuellement sur un ensemble de roulettes d'embarrage disposées sensiblement tangentiellement par rapport à la roue enclume jusqu'à une roue de relance chargée d'amener progressivement la vitesse du fil à une vitesse compatible avec la vitesse de coupe, puis à cette vitesse, après transfert du fil des roulettes d'embarrage sur la roue enclume le fil est introduit par le biais d'un bras articulé entre la roue enclume et la roue de coupe.

Bien que cette opération de relance présente l'avantage de préserver la stabilité thermique des filières en production durant la relance, une intervention humaine manuelle est requise pour déposer le fil et imprimer à celui-ci un trajet curviligne jusqu'à la roue de relance, ce qui rend l'opération difficilement automatisable en l'état, compte tenu de la cinématique des mouvements.

Une deuxième technique, décrite par exemple dans le document FR 2 804 974, qui améliore la précédente consiste à considérer un trajet rectiligne du fil entre la filière et la roue de relance. A cette fin, on interpose sur le trajet rectiligne un coupeur pour lequel on prévoit que l'équipage formé par la roue enclume et la roue de coupe forme une sorte de mâchoire qui peut, selon le cas, serrer progressivement le fil et l'animer d'un mouvement de rotation pour arriver au final, dans une position standard de coupe ou au contraire s'en écarter.

On conçoit alors qu'il est aisé d'automatiser un tel dispositif mais par contre un inconvénient majeur réside dans le fait qu'il ne peut couper qu'un seul fil provenant d'une seule filière et nécessite de dédier un coupeur de ce type à chaque filière, ce qui, d'un point de vue économique, est moins intéressant.

On connaît par ailleurs par le document US 5 935 289 un système de relance qui consiste au travers d'un organe de préhension cheminant au travers d'un tube de guidage à reproduire la cinématique de geste de l'utilisateur. Le principal inconvénient de cette solution réside principalement dans son encombrement, elle est en effet à demeure devant les filières et pose des problèmes de sécurité, elle risque d'entraver la circulation de l'utilisateur et ces interventions sur le procédé.

La présente invention propose une solution aux problèmes évoqués ci-dessus en proposant un procédé permettant d'automatiser la relance sur un coupeur positionné en aval d'une pluralité de filières.

Conformément à l'invention le procédé de relance automatique se **caractérise en ce que**
- on saisit au moins un fil issu d'une filière à l'aide d'un moyen de préhension,
- on déplace le moyen de préhension jusqu'à un moyen d'étirage, ce moyen d'étirage étant adapté pour amener ledit fil à une vitesse d'étirage compatible avec une opération de coupe réalisée lors du passage dudit fil entre une roue enclume et une roue de coupe d'une machine de coupe,
- on modifie le trajet du fil entre la filière et le moyen d'étirage à l'aide d'un moyen de transfert, ce moyen de transfert étant adapté pour faire passer le fil entre la roue enclume et la roue de coupe à l'aide d'un moyen d'engagement ou au contraire pour s'écarter de la roue enclume et de la roue de coupe.

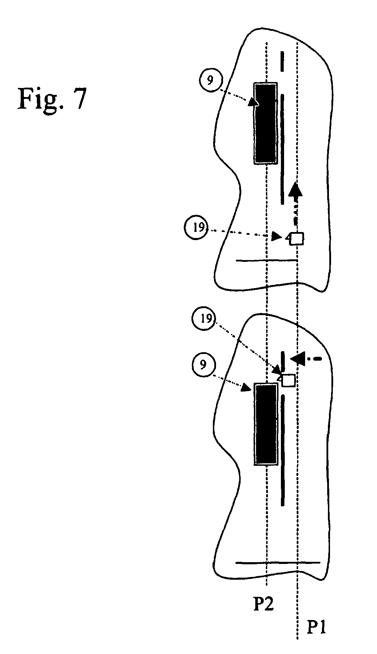

Dans d'autres modes de réalisation préférés de l'invention, on peut éventuellement avoir recours en outre à l'une et/ou à l'autre des dispositions suivantes :
- le moyen de transfert modifie la trajectoire du trajet du fil entre au moins un organe de guidage d'entrée et un organe de guidage de sortie respectivement positionné en amont et en aval de la machine de coupe de telle façon qu'en au moins une portion du trajet du fil, la trajectoire du fil longe au moins en partie la périphérie de la roue enclume et/ou de la roue de coupe,
- le moyen de transfert réalise un premier mouvement de déformation du trajet initial selon un plan vertical de relance perpendiculaire à l'axe de rotation de la roue de coupe et/ou de la roue enclume puis un second mouvement de transfert, du plan de relance P1 à un plan de coupe P2 (représentés en figure 7), selon une direction sensiblement horizontale et parallèle audit axe de rotation des roues de coupe et/ou enclume,
- le moyen de préhension se déplace d'une manière rectiligne entre les organes de guidage d'entrée et de sortie respectivement situés entre l'amont et l'aval de la machine de coupe,
- on introduit le fil en vitesse entre la roue enclume et la coupe à l'aide du moyen d'engagement.

Ainsi, la présente invention a pour objet un système destiné à la fabrication de fils coupés à usage technique, en particulier des fils en matière thermoplastique et notamment de fils de verre comprenant au moins une filière coopérant avec au moins une machine de coupe comprenant une roue enclume et une roue de coupe, ladite machine de coupe étant placée dans le prolongement de ladite filière

Conformément à l'invention, ledit système comprend en outre un moyen de préhension destiné à déplacer au moins un fil jusqu'à un moyen d'étirage dudit fil, et un moyen de transfert permettant de modifier le trajet du fil entre la filière et le moyen d'étirage dudit fil, le moyen de transfert pouvant en outre positionner le fil en au moins deux positions : l'une où le fil est animé d'un mouvement de traction au voisinage de la périphérie de la roue enclume et de la roue de coupe et l'autre où le fil est en retrait de la roue de coupe et de la roue enclume.

Dans d'autres modes de réalisation préférés de l'invention, on peut éventuellement avoir recours en outre à l'une et/ou à l'autre des dispositions suivantes :
- Le système comprend au moins un organe de guidage d'entrée du fil et au moins un organe de guidage de sortie du fil respectivement positionné en amont et en aval de la machine de coupe,
- L'organe de guidage d'entrée de fil est sensiblement aligné avec une roulette de renvoi positionnée sous la filière,
- L'organe de guidage d'entrée et/ou l'organe de guidage de sortie du fil est(sont) aligné(s) avec le moyen d'étirage du fil,
- Le moyen de transfert comprend un bras articulé muni d'au moins une roulette de relance, ce moyen de transfert étant articulé entre une première position dite de repos dans laquelle la roulette de relance n'interfère pas avec le trajet du fil entre l'organe de guidage d'entrée et l'organe de guidage de sortie, et une seconde position dite de travail dans laquelle la roulette de relance interfère avec le trajet du fil entre la roue d'entrée et la roue de sortie et modifie sa trajectoire jusqu'à venir longer la périphérie de la roue de coupe et/ou de la roue enclume,
- le moyen de transfert comprend en outre un moyen d'engagement,
- le moyen d'engagement comprend un bras articulé par rapport à la machine de coupe, ce bras articulé occupant une première position dans laquelle il n'interfère pas avec le trajet du fil et une seconde position dans laquelle il interfère avec le trajet du fil et de telle sorte qu'il force le fil à passer entre la roue enclume et la roue de coupe
- la moyen de transfert, en position de repos, est escamoté par rapport au trajet du fil.

Grâce à ce système de relance automatique, on peut accroître la productivité de tels systèmes (interventions humaines réduites), et diminuer les coûts de production tout en répondant aux nouvelles attentes des clients.

Plus précisément, en raison de la relance automatique, la cinématique du moyen de préhension subit plus difficilement des dérives dans le temps, ce qui diminue les risques d'observer des échecs à la relance du fait d'une intervention humaine inappropriée.

Préférentiellement, les différents éléments sont disposés de telle sorte que le trajet des fils et des filaments depuis la filière jusqu'à la machine de coupe, est globalement contenu dans un plan vertical, les filaments ayant une direction sensiblement verticale de la filière jusqu'au moyen de renvoi, et les fils ayant une direction sensiblement horizontale du moyen de renvoi jusqu'à leur entrée dans la machine de coupe.

Selon un mode de réalisation de l'invention, le système comprend plusieurs filières associées à une même machine de coupe, et lesdites filières sont alignées les unes à côté des autres.

D'autres caractéristiques, détails, avantages de la présente invention apparaîtront mieux à la lecture de la description qui va suivre, faite à titre illustratif et nullement limitatif, en référence aux dessins annexés sur lesquels :
- la figure 1 est une vue schématique d'ensemble, simplifiée, d'une installation selon l'art antérieur et
- les figure 2 à 6 illustrent les diverses phases du procédé de relance automatique objet de l'invention.
- La figure 7 est vue de dessus de l'installation illustrant les plans de coupe et de relance.

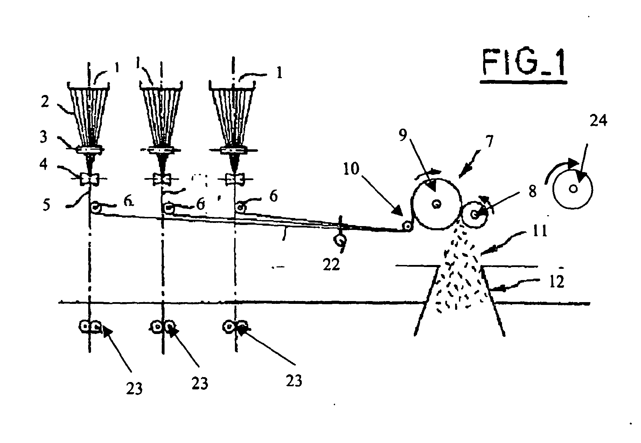

Sur la figure 1 apparaît donc, de façon schématique, le système selon l'art antérieur qui comprend au moins une filière 1 alimentée, de façon connue, à partir de verre fondu ou de billes de verre délivrées par un dispositif d'alimentation non représenté. Ces filières, par exemple en platine rhodié, sont chauffées couramment par effet joule. Elles sont munies à leur partie inférieure d'une pluralité d'orifices à partir desquels une pluralité de filaments 2 (ici certains sont représentés en traits mixtes) peuvent être étirés mécaniquement.

Les filaments 2 sont généralement soumis à un ensimage c'est-à-dire à un traitement chimique destiné à leur appliquer un produit apportant au fil une cohésion et une lubrification suffisante et une aptitude à son utilisation ultérieure en terme de processabilité et de compatibilité renfort/matrice, grâce à un rouleau ensimeur 3.

Les filaments issus d'une filière sont ensuite réunis par des roulettes d'assemblage 4 en au moins un fil 5 qui est dévié par un moyen tel qu'une roulette dite de déviation ou de renvoi 6 afin de les envoyer vers une machine de coupe 7 située en aval de l'ensemble filière 1, rouleau ensimeur 3 , roulette de déviation 6.

La machine de coupe 7 peut comprendre une roue porte-lame 8, une roue enclume 9, éventuellement une roue meuleuse, non représentée, comme décrit par exemple dans la demande de brevet FR 2 075 019 déposée au nom de la demanderesse.

Par ailleurs, la disposition des principaux constituants de l'installation illustrée en figure 1 est telle que le trajet des filaments 2 puis des fils 5 est globalement contenu dans un plan vertical, depuis la filière, jusqu'à la machine de coupe 7. Plus précisément les filaments 2 ont d'abord une direction sensiblement verticale depuis la filière jusqu'à la roulette de déviation ou de renvoi 6 puis les fils 5 décrivent un trajet sensiblement horizontal jusqu'à leur entrée dans la machine de coupe 7. Une roulette d'embarrage 10 peut être prévue à l'entrée de la machine afin de garantir un arc d'enroulement des fils sur la roue-enclume suffisamment grand pour assurer l'entraînement desdits fils par la force de friction.

La filière 1 et le rouleau ensimeur 3 sont disposés l'un au-dessus de l'autre par exemple dans une même cellule de fibrage qui repose sur un plancher sur lequel repose la machine de coupe.

La roulette de déviation 6 est disposée à l'aplomb du rouleau ensimeur 3. Une ouverture, réalisée dans le plancher permet le passage du faisceau de filaments en aval du rouleau ensimeur. Cette ouverture peut aussi permettre d'évacuer les fibres pendant les casses filière.

Ainsi les filaments 2 présentent un trajet sensiblement vertical, depuis la filière 1 jusqu'à la roulette de déviation 6 qui dévie les fils d'environ 90° pour les mener horizontalement (ou sensiblement horizontalement) vers la machine de coupe 7. La machine de coupe 7 comprend d'abord une roue porte lames 8 (ou roue de coupe) et une roue enclume 9. Des détails de construction de ces roues sont donnés dans la littérature antérieure, notamment dans la publication EP 0 040 145. Les roues de coupe et enclume sont au contact l'une de l'autre en légère pression, de telle sorte que dans la zone de contact, qui est aussi la zone de coupe, la déformation de l'élastomère entraîne l'affleurement des lames de la roue porte-lames. Dans la pratique, une seule des deux roues est motrice, l'autre étant entraînée à son contact De façon préférée, c'est la roue porte-lames qui est motrice. L'entraînement est conduit au moyen d'un moteur électrique, de préférence à transmission directe par le moyeu de la roue concernée.

Les fils coupés 11 sont récupérés dans un dispositif de réception 12. Dans les intervalles de fonctionnement de la découpe, en particulier lorsqu'une filière est remise en route, les fils sont tirés par un système d'étirage 23, communément appelé tire-fil (cf. figure 1). L'étirage des fils, préalablement à la mise en route de la découpe ou au moment d'une relance d'une filière, est nécessaire pour l'établissement d'un régime d'équilibre de la filière et donc pour garantir des qualités de fils bien déterminées.

En régime de marche, la traction sur les fils est opérée par la machine de coupe 7 dont l'une au moins de l'enclume 9 et de la roue porte-lames 8 est motorisée.

Le passage du fil en aplomb de la filière 1 à la machine de coupe 7, soit au démarrage de l'ensemble, soit lors d'une phase de relance, doit être effectué d'une manière ou d'une autre afin que le fil soit entraîné dans la zone de contact entre la roue de coupe et la roue enclume.

On rappellera que classiquement et selon l'art antérieur, cette introduction était réalisée manuellement par l'opérateur Du manière connue, cette phase de relance consiste à saisir un fil au niveau du tire-fil positionné en pieds de filière, à l'amener jusqu'à une roue de relance (schématiquement représentée par le repère 24 sur la figure 1) généralement située sur la machine de coupe, cette roue de relance assurant au fil qui s'enroule en surface périphérique de la roue de passer d'une vitesse nulle ou quasi nulle à une vitesse d'étirage similaire à celle qui sera imprimée par le dispositif de coupe.

La présente invention se propose de perfectionner cette installation de l'art antérieur en substituant la machine de coupe repérée 7 sur la figure 1, par celle représentée en figures (2 à 6) qui est pourvue d'un système de relance automatique. Pour une meilleure compréhension la machine de coupe et son système de relance automatique sont implantés en aval de la roulette de renvoi 6

Sans sortir du cadre de l'invention, la machine de coupe avec son système de relance automatique, peut être placée derrière, devant ou à droite, à gauche et dessous de la filière.

Sur le schéma de la figure 1, trois filières sont représentées. Selon l'invention, le nombre de filière est augmenté (supérieur à 6). Toutefois, ce nombre n'est pas indifférent. S'il est avantageux de pouvoir traiter une pluralité de fils simultanément, leur nombre multiplie aussi les risques de perturbations possible de l'ensemble, il convient donc d'établir un compromis entre le gain de productivité obtenu par la multiplication des fils et la perte de productivité liée à la fréquence des interruptions de fonctionnement qui dépend également du nombre des fils. Ceci souligne une nouvelle fois l'importance de pouvoir relancer automatiquement un fil sans interrompre la production.

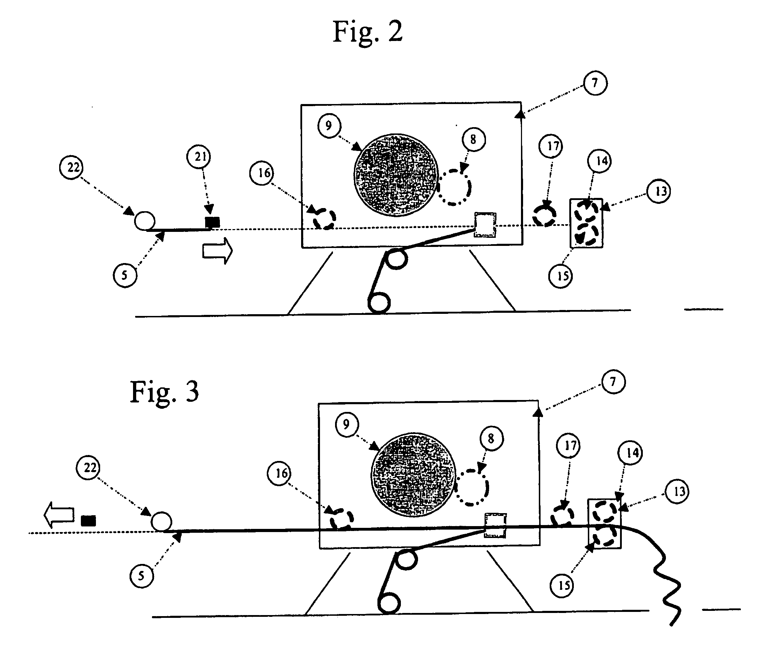

Pour ce faire, on utilise un moyen d'étirage rapide 13 (visible notamment en figure 2) qui est destiné à étirer au moins un fil 5 issu d'au moins une nappe de filaments 2, chacune des nappes provenant d'au moins une filière 1, ou d'une portion d'au moins une filière appartenant à une cabine de fibrage juxtaposée entre-elle. Ce moyen d'étirage rapide 13, au niveau du procédé de coupe directe sous filière, est inséré sur le trajet des fils 5 en aval de la machine de coupe 7, cette dernière pouvant être de manière non limitative, un coupeur dit « à double tête », ou un coupeur rotatif.

Le moyen d'étirage rapide comporte un châssis tridimensionnel possédant trois côtés ou plus, assemblé par des techniques classiques de mécano-soudage ou équivalent d'éléments standard du commerce.

Comme on peut le voir sur la figure 2, on a représenté schématiquement, par deux cercles en pointillés, les organes d'entraînement 14, 15. Chacun de ces organes 14, 15 fait saillie latéralement par rapport à l'un des côtés et est animé d'un mouvement de rotation respectivement en sens contraire l'un de l'autre. Ce mouvement de rotation est provoqué par une chaîne cinématique, comportant au moins un moteur positionné à l'intérieur du châssis. Le moteur, dont la vitesse peut être adaptée de manière à obtenir des vitesses de quelques mètres (0 à 5 m/s par exemple) par seconde à plusieurs dizaines de mètres par seconde (30 à 50 m/s) par tout moyen approprié comme par exemple un moteur asynchrone à variation de fréquence, ou un moteur à courant continu comportant une régulation de vitesse, est en prise par l'intermédiaire par exemple d'un système d'engrenages ou de poulies mues par des sangles avec un arbre sur lequel est montée chacune des roues. La vitesse d'étirage atteinte est sensiblement de l'ordre de grandeur de la vitesse de coupe atteinte par la machine de coupe 7.

En variante, les organes d'entraînement 14, 15 forment un coupeur. L'un des organes constitue l'enclume, l'autre forme une contre-roue coupeuse pourvue d'une pluralité de lames montées sensiblement perpendiculaires par rapport au trajet dudit fil. Cette variante de réalisation peut être particulièrement avantageuse car on peut continuer à produire des fils coupés durant les phases transitoires durant lesquelles on procède à des étapes de relance sur la machine de coupe principale.

Sur la figure 2, un dispositif de préhension 21, par exemple réalisé sous la forme d'un vérin dont l'une des extrémités est pourvue d'une pince ou d'une mâchoire, se saisit de la nappe de fil 5 dont on veut assurer automatiquement la relance et la déplace jusqu'au dispositif d'étirage 13., le dispositif de préhension ayant extrait le fil 5 du tire-fil 23 lors de sa course.

Le dispositif de préhension 21 muni de sa pince ou de tout autre dispositif similaire réalise un mouvement rectiligne à partir de la roulette de renvoi 6 jusqu'au dispositif d'étirage rapide 13.

Le procédé de relance automatique se décompose de la manière suivante (séquence de figures 2 à 6).

A la figure 3, le fil 5 est étiré par le dispositif d'étirage rapide 13 au travers des organes d'entraînement 14, 15, le trajet du fil est sensiblement rectiligne entre la roue de renvoi 6 et le dispositif d'étirage rapide 13 et sensiblement dans un plan vertical qui est perpendiculaire à l'axe de rotation des roues 9 et 8 de la machine de coupe 7.

On remarque que sur son trajet entre la roue de renvoi 10 et le dispositif d'étirage rapide 13, le fil 5 est guidé par au moins un organe de guidage d'entrée du fil 16 et au moins un organe de guidage de sortie 17 du fil respectivement positionné en amont et en aval de la machine de coupe 7. Ces organes sont sensiblement alignés et dans le même plan que la roue de renvoi 10 et le dispositif d'étirage rapide 13.

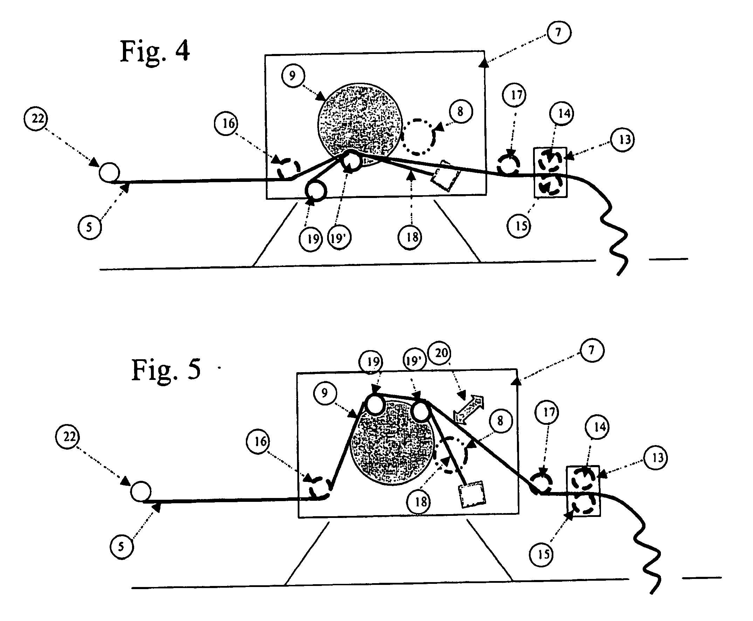

En figure 4, on a représenté de manière schématique un moyen de transfert 18. Ce moyen de transfert grâce à un mouvement relatif par rapport à la machine de coupe - dans l'exemple non limitatif de la figure 4, il s'agit d'un mouvement de rotation - permet de modifier la trajectoire du trajet du fil entre les organes de guidage d'entrée et de guidage de sortie 17, et ce, durant la phase d'étirage rapide du fil. (Ce mouvement relatif pourrait consister en un mouvement de translation ou une combinaison de mouvements de rotation et de translation).

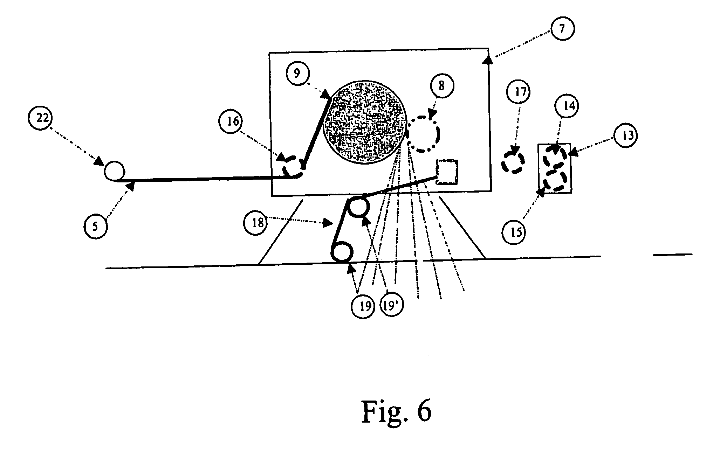

Ce moyen de transfert 18 est muni d'au moins une roulette de relance 19, 19', ce moyen de transfert 18 étant articulé entre une première position dite de repos (figure 4 ou figure 6) dans laquelle la roulette de relance n'interfère pas avec le trajet du fil entre l'organe de guidage d'entrée 16 et l'organe de guidage de sortie 17, et une seconde position dite de travail (figure 5) dans laquelle la roulette de relance interfère avec le trajet du fil entre l'organe de guidage d'entrée 16 et l'organe de guidage de sortie 17 et modifie sa trajectoire jusqu'à venir longer la périphérie de la roue enclume 9 et/ou de la roue de coupe 8.

Dans la phase de fonctionnement représentée en figure 5, le trajet du fil se décompose en deux temps entre sa position de repos et sa position de travail. En effet durant, ce mouvement de transfert, il convient que le fil réalise un mouvement dans un plan vertical qui constitue le plan de relance P1 (visible en figure 7) qui l'amène sensiblement au regard de la périphérie des roues de coupe et enclume puis un second mouvement sensiblement dans un plan horizontal sensiblement perpendiculaire au précédent, qui constitue le plan de coupe P2 (visible en figure 7), au cours duquel le fil demeure en périphérie des roues de coupe et enclume et puisse cheminer au dessus de ces dernières afin qu'un moyen d'engagement 20 (représenté symboliquement par une flèche double sur la figure 5) puisse, comme son nom l'indique, engager le fil entre la roue de coupe et la roue enclume comme cela est représenté en figure 6.

Dans l'exemple représenté en figure 5, le moyen d'engagement peut être réalisé par un bras articulé par rapport à la machine de coupe, ce bras articulé occupant une première position dans laquelle il n'interfère pas avec le trajet du fil et une seconde position dans laquelle il interfère avec le trajet du fil et de telle sorte qu'il est situé dans un plan passant entre la roue enclume et la roue de coupe. On remarque qu'en position de repos (cf figure 6), le moyen de transfert 18 et ses roulettes de relance 19, 19' est escamoté par rapport au trajet du fil et se trouve à un niveau inférieur par rapport à la base de la machine de coupe qui est susceptible de tourner sur elle même.

Dans la séquence représentée en figures 2 à 6, on a illustré la relance automatique d'un fil depuis l'aplomb d'une filière jusqu'à la machine de coupe, mais on comprend aisément que cette séquence peut être mise en oeuvre pour n'importe quel fil venant d'au moins filière ou d'une portion de filière, étant entendu que pendant la phase de relance de l'un des fils, les autres demeurent en production à savoir qu'ils sont coupés par la machine de coupe.

L'ensemble des moyens de transfert, d'engagement, de préhension, d'étirage du système de relance automatique précédemment décrit est mis en oeuvre et contrôlé par un automate ou tout système informatique équivalent.

La présente invention permet avantageusement de répondre aux exigences de plus en plus marquées en matière de sécurité. En utilisant la relance automatique, le temps de contact entre l'opérateur et la fibre est réduit, ce qui limite de ce fait les risques d'incident (coupure, brûlure...)

Conformément à la présente invention, l'utilisateur se voit assister lors des phases de relance automatique de chacune des filières, il voit ainsi ses déplacements considérablement réduits entre les filières et le coupeur, il peut ainsi porter toute son attention sur la phase transitoire de rétablissement de la stabilité thermique de la filière.

## Revendications

1. Procédé de relance automatique, dans lequel
- on saisit au moins un fil (5) issu d'une filière (1) à l'aide d'un moyen de préhension (21),
- on déplace le moyen de préhension (21) jusqu'à un moyen d'étirage (13), ce moyen d'étirage étant adapté pour amener ledit fil (5) à une vitesse d'étirage compatible avec une opération de coupe réalisée lors du passage dudit fil entre une roue enclume (9) et une roue de coupe (8) d'une machine de coupe (7),
- on modifie le trajet du fil (5) entre la filière (1) et le moyen d'étirage (13) à l'aide d'un moyen de transfert (18), ce moyen de transfert (18) étant adapté pour faire passer le fil (1) entre la roue enclume (9) et la roue de coupe (8) à l'aide d'un moyen d'engagement (20) ou au contraire pour s'écarter de la roue de coupe et de la roue enclume, **caractérisé en ce que** le moyen de transfert (18) réalise un premier mouvement de déformation du trajet initial selon un plan vertical de relance perpendiculaire à l'axe de rotation de la roue de coupe et/ou de la roue enclume puis un second mouvement de transfert du plan de relance (P1) à un plan de coupe (P2) selon une direction sensiblement horizontale et parallèle audit axe de rotation des roues de coupe et/ou enclume.

2. Procédé selon la revendication 1, **caractérisé en ce que** le moyen de transfert (18) modifie la trajectoire du trajet du fil (5) entre au moins un organe de guidage d'entrée (16) et un organe de guidage de sortie (17) respectivement positionné en amont et en aval de la machine de coupe (7) de telle façon qu'en au moins une portion du trajet du fil (5), la trajectoire du fil (5) longe au moins en partie la périphérie de la roue enclume (9) et/ou de la roue de coupe (8).

3. Procédé selon la revendication 1, **caractérisé en ce que** le moyen de préhension (21) se déplace d'une manière rectiligne entre les organes de guidage d'entrée (16) et de sortie (17) respectivement situés entre l'amont et l'aval de la machine de coupe.

4. Procédé selon l'une quelconque des revendications précédentes, **caractérisé en ce qu'**on introduit le fil (5) en vitesse entre la roue enclume (9) et la roue de coupe (8) à l'aide du moyen d'engagement (20).

5. Système destiné à la fabrication de fils coupés, tels que notamment des fils de verre coupés comprenant au moins une filière (1) coopérant avec au moins une machine de coupe (7) comprenant une roue enclume (9) et une roue de coupe (8), ladite machine de coupe (7) étant placée dans le prolongement de ladite filière (1) et permettant la mise en oeuvre du procédé selon l'une quelconque des revendications 1 à 4, **caractérisé en ce que** ledit système comprend en outre un moyen de préhension (21) destiné à déplacer au moins un fil (5) jusqu'à un moyen d'étirage (13) dudit fil, et un moyen de transfert (18) permettant de modifier le trajet du fil (5) entre la filière (1) et le moyen d'étirage (13) dudit fil, le moyen de transfert (18) pouvant en outre positionner le fil en au moins deux positions : l'une où le fil est animé d'un mouvement de traction au voisinage de la périphérie de la roue enclume (9) et de la roue de coupe (8) et l'autre où le fil (5) est en retrait de la roue de coupe (8) et de la roue enclume (9), **caractérisé en ce que** le moyen de transfert (18), en position de repos, est escamoté par rapport au trajet du fil (5).

6. Système selon la revendication 5, **caractérisé en ce que** le système comprend au moins un organe de guidage d'entrée (16) du fil et au moins un organe de guidage de sortie (17) du fil (5) respectivement positionné en amont et en aval de la machine de coupe (7).

7. Système selon l'une des revendications 5 ou 6, **caractérisé en ce que** l'organe de guidage d'entrée (16) de fil est sensiblement aligné avec une roulette de renvoi (6) positionnée sous la filière.

8. Système selon l'une quelconque des revendications 5 à 7, **caractérisé en ce que** l'organe de guidage d'entrée (16) et/ou l'organe de guidage de sortie (17) du fil est(sont) allgné(s) avec le moyen d'étirage (13) du fil.

9. Système selon l'une quelconque des revendications 5 à 8, **caractérisé en ce que** le moyen de transfert (18) comprend un bras articulé muni d'au moins une roulette de relance (19, 19'), ce moyen de transfert étant articulé entre une première position dite de repos dans laquelle la roulette de relance (19, 19') n'interfère pas avec le trajet du fil (5) entre l'organe de guidage d'entrée (16) et l'organe de guidage de sortie (17), et une seconde position dite de travail dans laquelle la roulette de relance (19, 19') interfère avec le trajet du fil entre l'organe de guidage d'entrée (16) et l'organe de guidage de sortie (17) et modifie sa trajectoire jusqu'à venir longer la périphérie de la roue de coupe (8) et/ou de la roue enclume (9).

10. Système selon l'une quelconque des revendications 5 à 9, **caractérisé en ce que** le moyen de transfert (18) comprend en outre un moyen d'engagement (20).

11. Système selon la revendication 10, **caractérisé en que** le moyen d'engagement (20) comprend un bras articulé par rapport à la machine de coupe, ce bras articulé occupant une première position dans laquelle il n'interfère pas avec le trajet du fil (5) et une seconde position dans laquelle il interfère avec le trajet du fil (5) et de telle sorte qu'il force le fil à passer entre la roue enclume (9) et la roue de coupe (8).

12. Système selon la revendication 5, **caractérisé en ce que** le moyen d'étirage comporte un châssis tridimensionnel possédant des organes d'entraînement (14, 15) animés d'un mouvement de rotation.

13. Système selon la revendication 12, **caractérisé en ce que** les organes d'entraînement (14, 15) forment un coupeur.

## Claims

1. Automatic restart procedure, wherein:
- at least one strand (5) coming from a bushing (1) is grabbed by a gripping means (21);
- the gripping means (21) is moved right to a drawing means (13), this drawing means being adapted to bring said strand (5) to a drawing speed compatible with a chopping operation carried out as said strand passes between an anvil wheel (9) and a chopper wheel (8) of a chopping machine (7); and
- the path of the strand (5) between the bushing (1) and the drawing means (13) is modified using a transfer means (18), this transfer means (18) being adapted to pass the strand (1) between the anvil wheel (9) and the chopper wheel (8) using an engagement means (20) or, on the contrary, to be moved away from the chopper wheel and the anvil wheel, **characterized in that** the transfer means (18) performs a first movement in which the initial path is deformed in a vertical restart plane perpendicular to the axis of rotation of the chopper wheel and/or the anvil wheel, and then a second movement of transfer from the restart plane (P1) to a chopping plane (P2) in an approximately horizontal direction parallel to said rotation axis of the chopper and/or anvil wheels.

2. Procedure according to Claim 1, **characterized in that** the transfer means (18) modifies the trajectory of the path of the strand (5) between at least one entry guiding member (16) and an exit guiding member (17) positioned respectively upstream and downstream of the chopping machine (7) in such a way that, in at least one portion of the path of the strand (5), the trajectory of the strand (5) hugs, at least in part, the periphery of the anvil wheel (9) and/or of the chopper wheel (8).

3. Procedure according to Claim 1, **characterized in that** the gripping means (21) is moved in a linear fashion between the entry guiding member (16) and the exit guiding member (17) respectively, said members being located between the upstream end and the downstream end of the chopping machine.

4. Procedure according to any one of the preceding claims, **characterized in that** the strand (5) is introduced, at speed, between the anvil wheel (9) and the chopper wheel (8) using the engagement means (20).

5. System for manufacturing chopped strands, such as especially chopped glass strands, comprising at least one bushing (1) that cooperates with at least one chopping machine (7) comprising an anvil wheel (9) and a chopper wheel (8), said chopping machine (7) being placed in the extension of said bushing (1) and being configured to implement the procedure according to any one of claims 1 to 4, **characterized in that** said system further includes a gripping means (21) for moving at least one strand (5) up to a drawing means (13) for drawing said strand, and a transfer means (18) for modifying the path of the strand (5) between the bushing (1) and the drawing means (13) for drawing said strand, the transfer means (18) also being able to position the strand in at least two positions, namely one in which the strand is subjected to a pulling movement near the periphery of the anvil wheel (9) and the chopper wheel (8) and the other in which the strand (5) is set back from the chopper wheel (8) and the anvil wheel (9), **characterized in that** the transfer means (18), in the rest position, is set back from the path of the strand (5).

6. System according to Claim 5, **characterized in that** it includes at least one entry guiding member (16) for guiding the strand and at least one exit guiding member (17) for guiding the strand (5), said means being positioned upstream and downstream of the chopping machine (7), respectively.

7. System according to either of Claims 5 and 6, **characterized in that** the entry guiding member (16) is aligned substantially with a turn roller (6) positioned beneath the bushing.

8. System according to any one of Claims 5 to 7, **characterized in that** the entry guiding member (16) and/or the exit guiding member (17) are/is aligned with the drawing means (13).

9. System according to any one of Claims 5 to 8, **characterized in that** the transfer means (18) comprises an articulated arm provided with at least one restart roll (19, 19'), this transfer means being articulated between a first position, called the rest position, in which the restart roll (19, 19') does not interfere with the path of the strand (5) between the entry guiding member (16) and the exit guiding member (17), and a second position, called the working position, in which the restart roll (19, 19') does interfere with the path of the strand between the entry guiding member (16) and the exit guiding member (17) and modifies its trajectory so as to make it hug the periphery of the chopper wheel (8) and/or the anvil wheel (9).

10. System according to any one of Claims 5 to 9, **characterized in that** the transfer means (18) further includes an engagement means (20).

11. System according to Claim 10, **characterized in that** the engagement means (20) comprises an arm articulated with respect to the chopper machine, this articulated arm occupying a first position in which it does not interfere with the path of the strand (5) and a second position in which it does interfere with the path of the strand (5) and in such a way that it forces the strand to pass between the anvil wheel (9) and the chopper wheel (8).

12. System according to Claim 5, **characterized in that** the drawing means comprises a three-dimensional frame possessing drive members (14, 15) that undergo a rotational movement.

13. System according to Claim 12, **characterized in that** the drive members (14, 15) form a chopper.

## Patentansprüche

1. Verfahren zum automatischen Anspinnen, bei welchem
- mindestens ein aus einer Spinndüse (1) stammender Faden (5) mit Hilfe eines Greifmittels (21) gefaßt wird,
- das Greifmittel (21) bis zu einem Ziehmittel (13) bewegt wird, wobei das Ziehmittel dazu ausgebildet ist, den Faden (5) auf eine Ziehgeschwindigkeit zu bringen, die mit einem durch Führen des Fadens zwischen ein Amboßrad (9) und ein Schneidrad (8) einer Schneidmaschine (7) realisierten Schneidvorgang kompatibel ist,
- der Weg des Fadens (5) zwischen der Spinndüse (1) und dem Ziehmittel (13) mit Hilfe eines Übertragungsmittels (18) verändert wird, wobei das Übertragungsmittel (18) dazu ausgebildet ist, den Faden (5) zwischen dem Amboßrad (9) und das Schneidrad (8) mit Hilfe eines Belegmittels (20) passieren oder sich im Gegenteil von dem Schneidrad und dem Amboßrad (9) entfernen zu lassen,
**dadurch gekennzeichnet, daß**
das Übertragungsmittel (18) eine erste Bewegung zur Änderung des anfänglichen Weges in einer vertikalen Anspinnebene, welche senkrecht zur Rotationsachse des Schneidrades und/oder des Amboßrades ist, durchführt und dann eine zweite Bewegung zum Verschieben der Anspinnebene (P1) zu einer Schnittebene (P2) in einer Richtung durchführt, welche im wesentlichen horizontal und parallel zu den Rotationsachsen der Schneid- und/oder Amboßräder ist.

2. Verfahren nach Anspruch 1, **dadurch gekennzeichnet, daß** das Übertragungsmittel (18) den Wegverlauf der Weges des Fadens (5) zwischen mindestens einem Eingangsführungsorgan (16) und einem Ausgangsführungsorgan (17) verändert, welche der Schneidemaschine (7) vor- bzw. nachgeordnet sind, so daß mindestens ein Abschnitt des Weges des Fadens (5) an mindestens einem Teil des Umfangs des Amboßrads (9) und/oder des Schneidrads (8) entlang geführt wird.

3. Verfahren nach Anspruch 1, **dadurch gekennzeichnet, daß** das Greifmittel (21) sich geradlinig zwischen den Eingangs- (16) und Ausgangsführungsorganen (17), welche der Schneidemaschine vor- bzw. nachgeordnet sind, bewegt.

4. Verfahren nach einem der vorangehenden Ansprüche, **dadurch gekennzeichnet, daß** der Faden (5) mit Geschwindigkeit zwischen das Amboßrad (9) und das Schneidrad (8) mit Hilfe des Belegmittels (20) eingeführt wird.

5. System zur Herstellung geschnittener Fäden, wie insbesondere geschnittener Glasfäden, umfassend mindestens eine Spinndüse (1), welche mit mindestens einer Schneidmaschine (7), welche ein Amboßrad (9) und ein Schneidrad (8) umfaßt, zusammenarbeitet, wobei die Schneidmaschine (7) in Verlängerung der Spinndüse (1) angeordnet ist und die Ausführung eines Verfahrens nach einem der Ansprüche 1 bis 4 erlaubt, **dadurch gekennzeichnet, daß** die Vorrichtung ferner ein Greifmittel (21), welches dazu bestimmt ist, mindestens einen Faden (5) bis zu einem Ziehmittel (13) für den Faden zu verschieben, und ein Übertragungsmittel (18) umfaßt, welches es erlaubt, den Weg des Fadens (5) zwischen der Spinndüse (1) und dem Ziehmittel (13) des Fadens zu verändern, wobei das Übertragungsmittel (18) zusätzlich den Faden in mindestens zwei Positionen positionieren kann: einer, in welcher der Faden in einer Traktionsbewegung in der Nähe des Umfangs des Amboßrades (9) und des Schneidrads (8) angetrieben wird, und einer anderen, in welcher der Faden von dem Schneidrad (8) und Amboßrad (9) zurückgezogen ist, **dadurch gekennzeichnet, daß** das Übertragungsmittel (18) in einer Ruhestellung bezüglich des Weges des Fadens (5) eingezogen ist.

6. System nach Anspruch 5, **dadurch gekennzeichnet, daß** die Vorrichtung mindestens ein Eingangsführungsorgan (16) des Fadens und mindestens ein Ausgangsführungsorgan (17) des Fadens (5) umfaßt, welche der Schneidmaschine (7) vor- bzw. nachgeordnet sind.

7. System nach einem der Ansprüche 5 oder 6, **dadurch gekennzeichnet, daß** das Eingangsführungsorgan (16) des Fadens im wesentlichen mit einer Umlenkrolle (6), welche unter der Spinndüse angeordnet ist, ausgerichtet ist.

8. System nach einem der Ansprüche 5 bis 7, **dadurch gekennzeichnet, daß** das Eingangsführungsorgan (16) und/oder das Ausgangsführungsorgan (17) des Fadens mit dem Ziehmittel (13) des Fadens ausgerichtet ist (sind).

9. System nach einem der Ansprüche 5 bis 8, **dadurch gekennzeichnet, daß** das Übertragungsmittel (18) einen Gelenkarm umfaßt, welcher mit mindestens einer Anspinnrolle (19, 19') ausgestattet ist, wobei das Übertragungsmittel zwischen einer ersten Stellung, die Ruhestellung genannt wird, in welcher die Anspinnrolle (19, 19') in den Weg des Fadens (5) zwischen dem Eingangsführungsorgan (16) und dem Ausgangsführungsorgan (17) nicht eingreift, und einer zweiten Stellung, die Arbeitsstellung genannt wird, in welcher die Anspinnrolle (19, 19') in den Weg des Fadens (5) zwischen dem Eingangsführungsorgan (16) und dem Ausgangsführungsorgan (17) eingreift und seinen Weg verändert, bis er am Umfang des Schneidrads (8) und/oder des Amboßrads (9) entlang geführt wird, gelenkig beweglich ist.

10. System nach einem der Ansprüche 5 bis 9, **dadurch gekennzeichnet, daß** das Übertragungsmittel (18) unter anderem ein Belegmittel (20) umfaßt.

11. System nach Anspruch 10, **dadurch gekennzeichnet, daß** das Belegmittel (20) einen bezüglich der Schneidmaschine gelenkig beweglichen Arm umfaßt, wobei der gelenkig bewegliche Arm eine erste Position, in welcher
